# EUROPEAN PATENT APPLICATION

(11) **EP 4 488 629 A1**
(43) Date of publication of application: **08.01.2025**
(21) Application number: 23759799.2
(22) Date of filing: 15.02.2023
(51) Int. Cl.: G01C 21/26, A61H 3/00, G06F 3/01, G08G 1/005

(54) **MOVEMENT ASSISTANCE DEVICE AND MOVEMENT ASSISTANCE METHOD**

(30) Priority: 28.02.2022 JP 2022029032
(71) Applicant: Sony Group Corporation, Tokyo 108-0075 (JP)
(72) Inventor: MOTOKURA Kurena, Tokyo 108-0075 (JP); NISHIKAWA Jun, Tokyo 108-0075 (JP); YAMAMOTO Yusuke, Tokyo 108-0075 (JP); SAITO Mari, Tokyo 108-0075 (JP); UTSUKI Shingo, Tokyo 108-0075 (JP); SUZUKI Hiroyuki, Tokyo 108-0075 (JP); YAMASAKI Takayoshi, Tokyo 108-0075 (JP); KANO Ritsuko, Tokyo 108-0075 (JP); MIYASHITA Hiroko, Tokyo 108-0075 (JP)
(74) Representative: 2SPL Patentanwälte PartG mbB
(86) International application number: PCT/JP2023/005102
(87) International publication number: WO 2023/162798

(57) **Abstract**

The present technology relates to a movement assistance device and a movement assistance method capable of safely guiding a user.

A movement assistance device includes a drive control unit configured to control a drive unit to apply, to a user, an assisting force that is a resultant force of a virtual force that is a force for stabilizing a posture of the user and a guiding force that is a force for guiding the user. The present technology can be applied to, for example, a movement assistance system using a drone.

## Description

### TECHNICAL FIELD

The present technology relates to a movement assistance device and a movement assistance method, and more particularly, to a movement assistance device and a movement assistance method capable of safely guiding a user.

### BACKGROUND ART

Conventionally, there has been proposed a technique of giving a stimulus to a foot of a user by a direction presentation unit built in or externally attached to a shoe of the user to instruct a traveling direction (see, for example, Patent Document 1).

### CITATION LIST

### PATENT DOCUMENT

Patent Document 1: Japanese Patent Application Laid-Open No. 2015-75386

### SUMMARY OF THE INVENTION

### PROBLEMS TO BE SOLVED BY THE INVENTION

However, in the technique disclosed in Patent Document 1, only the traveling direction of the user is indicated, and safe guidance of the user is not considered.

The present technology has been made in view of such a situation, and enables safe guidance to a user.

### SOLUTIONS TO PROBLEMS

A movement assistance device according to an aspect of the present technology includes a drive control unit configured to control a drive unit to apply, to a user, an assisting force that is a resultant force of a virtual force that is a force for stabilizing a posture of the user and a guiding force that is a force for guiding the user.

A movement assistance method according to an aspect of the present technology controls a drive unit to apply, to a user, an assisting force that is a resultant force of a virtual force that is a force for stabilizing a posture of the user and a guiding force that is a force for guiding the user.

In one aspect of the present technology, an assisting force that is a resultant force of a virtual force that is a force for stabilizing a posture of a user and a guiding force that is a force for guiding the user is applied to the user.

### BRIEF DESCRIPTION OF DRAWINGS

Fig. 1 is a diagram illustrating a basic concept of the present technology.
Fig. 2 is a diagram illustrating a virtual force, a guiding force, and an assisting force.
Fig. 3 is a block diagram illustrating a movement assistance system according to a first embodiment of the present technology.
Fig. 4 is a flowchart illustrating movement assistance processing executed by the movement assistance system in Fig. 3.
Fig. 5 is a schematic external view of a movement assistance system according to a second embodiment of the present technology.
Fig. 6 is a block diagram illustrating the movement assistance system according to the second embodiment of the present technology.
Fig. 7 is a flowchart illustrating movement assistance processing executed by the movement assistance system of Figs. 5 and 6.
Fig. 8 is a diagram illustrating an example of a method of setting a guidance direction.
Fig. 9 is a diagram illustrating the example of the method of setting the guidance direction.
Fig. 10 is a diagram illustrating the example of the method of setting the guidance direction.
Fig. 11 is a diagram illustrating the example of the method of setting the guidance direction.
Fig. 12 is a diagram illustrating the example of the method of setting the guidance direction.
Fig. 13 is a diagram illustrating the example of the method of setting the guidance direction.
Fig. 14 is a diagram illustrating the example of the method of setting the guidance direction.
Fig. 15 is a diagram illustrating the example of the method of setting the guidance direction.
Fig. 16 is a state machine diagram of the movement assistance system of Figs. 5 and 6.
Fig. 17 is a block diagram illustrating a configuration example of a computer.

### MODE FOR CARRYING OUT THE INVENTION

Hereinafter, modes for carrying out the present technology will be described. The description will be given in the following order.
1. Overview of Present Technology
2. First Embodiment
3. Second Embodiment
4. Modifications
5. Others

### «1. Overview of Present Technology»

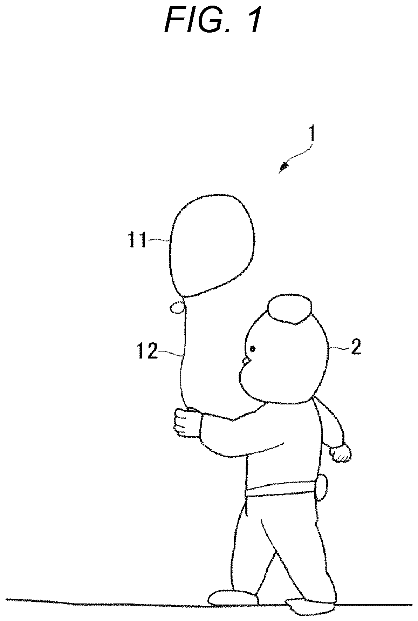

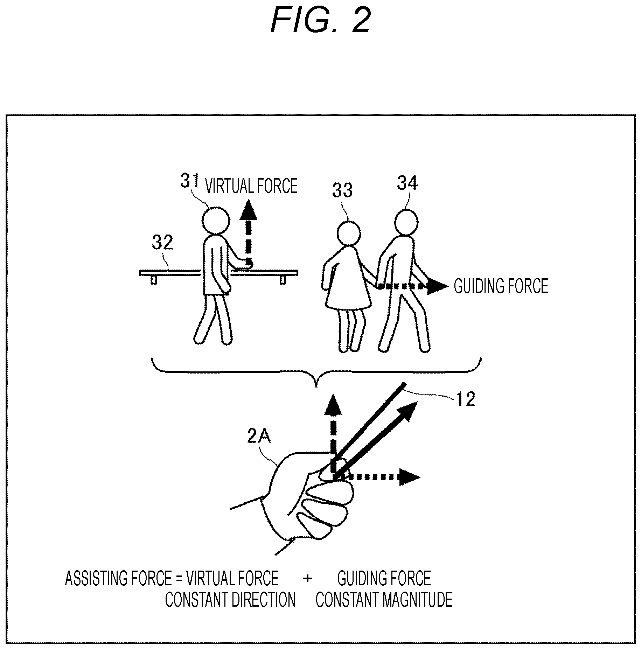

First, an outline of the present technology will be described with reference to Figs. 1 and 2.

Fig. 1 shows a configuration example of a balloon robot 1 showing a basic concept of the present technology (in particular, a second embodiment of the present technology to be described later).

The balloon robot 1 includes a balloon-shaped flight unit 11 and a string 12. The flight unit 11 is connected to the string 12 and can autonomously fly. For example, the flight unit 11 flies at a position higher than an eye line of a user 2.

The user 2 moves while holding the vicinity of an end of the string 12. Then, in a case where support of the user 2 is required, the balloon robot 1 guides the user 2 to a target position.

Here, since the balloon robot 1 is flying at a position higher than the eye line of the user 2, it is possible to monitor a wide range around the user 2 from a high position. Therefore, the balloon robot 1 can sense an obstacle around the user 2 in advance and can guide the user 2 to avoid the obstacle.

In addition, since the balloon robot 1 is flying in the air, it is possible to stably guide the user 2 without falling down and the like even in stairs or uneven roads.

On the other hand, in the case where there is no need to support the user, the robot 1 just follows the user 2.

Fig. 2 shows a breakdown of a force applied to a hand 2A of the user 2 to guide the user 2.

An assisting force that is a resultant force of a virtual force and a guiding force is applied to the hand 2A of the user 2.

The virtual force is a force that generates a light touch effect that stabilizes the user's posture (standing posture and walking posture). For example, as illustrated in Fig. 2, a force for supporting the user 31 upward by a handrail 32 corresponds to a virtual force.

The guiding force is a force that acts in a direction of guiding the user 2 (hereinafter, referred to as a guidance direction) and guides the user 2 in the guidance direction. For example, as illustrated in Fig. 2, in a case where a user 34 is pulling a left hand of a user 33 to guide the user 33, a force applied to the left hand of the user 33 corresponds to the guiding force.

An assisting force that is a resultant force of the virtual force and the guiding force is applied to a hand 2A of the user 2. Specifically, tension generated by the flight unit 11 pulling the string 12 is applied as an assisting force to the hand 2A of the user 2 through the string 12.

As a result, the user 2 is guided in the guidance direction, the posture is stabilized by a light touch effect, and the user 2 can safely move to a target position.

Note that, as will be described later, a magnitude of the virtual force changes depending on a position of a part of a body (hereinafter, referred to as a target part) of the user to which the virtual force is applied. The magnitude of the virtual force is a magnitude at which the virtual force is applied to the target part of the user 2, in other words, a magnitude at which the virtual force acts on the target part of the user. Furthermore, the target part is a point of action at which the virtual force acts on the user. In the examples of Figs. 1 and 2, the hand 2A of the user 2 is the target part.

For example, the magnitude of the virtual force is set within a range of 0.3 N to 0.5 N on the basis of the position of the target part in the vertical direction. This is a magnitude close to an upward force applied to the hand of the user by the handrail in a case where the user lightly touches the handrail, for example.

On the other hand, the direction of the virtual force is fixed in the vertical direction. That is, the direction of the virtual force is set vertically upward or vertically downward. The direction of the virtual force is a direction in which the virtual force is applied to the target part of the user, in other words, a direction in which the virtual force acts on the target part of the user.

On the other hand, the magnitude of the guiding force is set to be constant. The magnitude of the guiding force is a magnitude at which the guiding force is applied to the target part of the user, in other words, a magnitude at which the guiding force acts on the target part of the user.

For example, the magnitude of the guiding force is set in a range of 0.2 N to 0.4 N.

On the other hand, the direction of the guiding force changes according to the direction (guidance direction) of guiding the user. The direction of the guiding force is a direction in which the guiding force is applied to the target part of the user, in other words, a direction in which the guiding force acts on the target part of the user.

In this manner, the direction of the virtual force becomes constant, and the magnitude of the guiding force becomes constant, whereby the user 2 can intuitively identify the virtual force and the guiding force.

Furthermore, ranges of the magnitudes of the virtual force and the guiding force described above are based on the results of a sensory test evaluated by simultaneously applying the virtual force and the guiding force to a person. Specifically, in a case where the virtual force and the guiding force are simultaneously applied to a closed eye person, the result that the posture of the person is stabilized with high probability and the guidance direction can be clearly recognized within the magnitude range of the virtual force and the guiding force described above is obtained.

However, since there are individual differences in the sense of the virtual force and the guiding force, the sense is not necessarily limited to the above-described range.

### «2. First Embodiment»

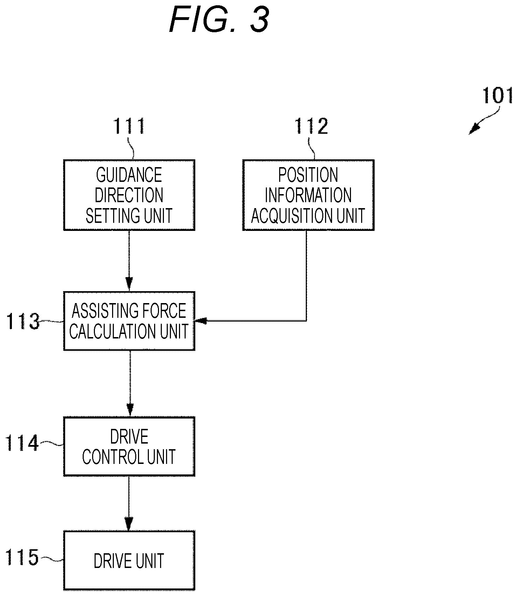

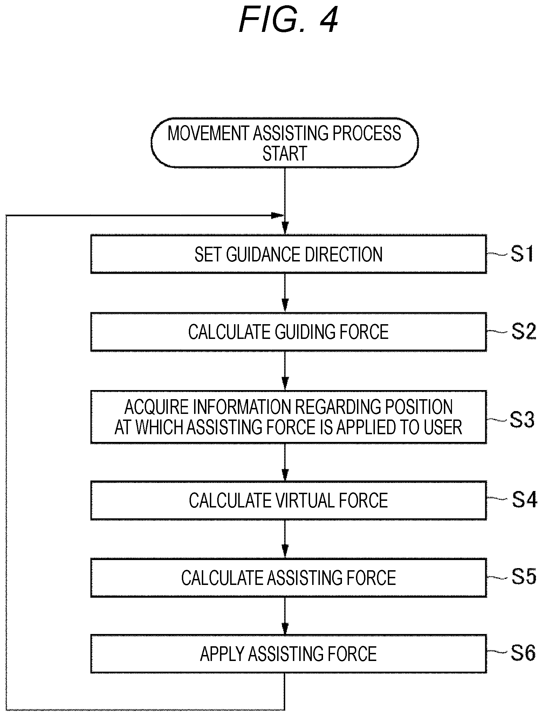

Next, a first embodiment of the present technology will be described with reference to Figs. 3 and 4.

### <Configuration Example of Movement Assistance System 101>

Fig. 3 illustrates a configuration example of functions of a movement assistance system 101 according to the present technology.

The movement assistance system 101 is a system that safely guides the user by applying the assisting force described above with reference to Fig. 2 to the user.

The form of the movement assistance system 101 is not particularly limited as long as it can apply an assisting force to an arbitrary part (target part) of the user's body. For example, the movement assistance system 101 may be of a mobile object type, a wearable type, or the like.

The movement assistance system 101 of the mobile object type includes, for example, a mobile object such as a robot or a drone, and applies an assisting force to the user by movement of the mobile object. For example, a mobile object connected to the string moves as in the balloon robot 1 of Fig. 1, so that an assisting force is applied to the hand of the user holding the string. For example, the mobile object moves in a state where the user touches the mobile object by holding a hand or the like, so that an assisting force is applied to a portion where the user touches the mobile object.

The wearable movement assistance system 101 includes, for example, a wearable device worn on the body of the user. The form of the wearable device is not particularly limited. For example, a ring type to be fitted to a finger, a bracelet type to be wound around a wrist or an arm, a backpack type to be carried on a back, a shoulder type to be hung on a shoulder, a belt type to be wound around a waist, and the like are assumed. The wearable movement assistance system 101 applies an assisting force to a part (target part) worn on the body of the user, for example, a finger, a wrist, an arm, a back, a shoulder, a waist, or the like.

The movement assistance system 101 includes a guidance direction setting unit 111, a position information acquisition unit 112, an assisting force calculation unit 113, a drive control unit 114, and a drive unit 115.

The guidance direction setting unit 111 sets a direction (guidance direction) for guiding the user. The guidance direction setting unit 111 supplies information indicating the set guidance direction to the assisting force calculation unit 113.

The position information acquisition unit 112 acquires information associated with the position of the target part of the user. The position information acquisition unit 112 supplies information associated with the position of the target part of the user to the assisting force calculation unit 113.

The assisting force calculation unit 113 calculates the magnitude and direction of the virtual force and the guiding force on the basis of the guidance direction and the position of the target part. In addition, the assisting force calculation unit 113 calculates the magnitude and the direction of the assisting force on the basis of the magnitude and the direction of the virtual force and the guiding force. The assisting force calculation unit 113 supplies information indicating the magnitude and direction of the assisting force to the drive control unit 114.

The drive control unit 114 controls the drive unit 115 so that the calculated assisting force is applied to the target part of the user.

The drive unit 115 is a portion that is driven to generate an assisting force and apply the assisting force to the user under the control of the drive control unit 114. For example, the drive unit 115 includes a power source such as an engine or a motor of a mobile object. For example, the drive unit 115 includes a motor, an actuator, or the like of the wearable device.

### <Movement Assistance Processing>

Next, movement assistance processing executed by the movement assistance system 101 will be described with reference to a flowchart of Fig. 4.

This processing starts, for example, when the user instructs the movement assistance system 101 to perform guidance, and ends when the user arrives at the target position.

In Step S1, the guidance direction setting unit 111 sets the guidance direction. For example, the guidance direction setting unit 111 acquires information associated with a current position and the target position of the user, and an environment around the user.

Note that a method of acquiring the information associated with the current position and the target position of the user and the environment around the user is not particularly limited. For example, information associated with the current position of the user is acquired using a global navigation satellite system (GNSS) receiver or the like. For example, information associated with the target position is acquired by user input. For example, information associated with the environment around the user is acquired on the basis of sensing information obtained by sensing the surroundings of the user by various sensors.

For example, the guidance direction setting unit 111 sets the direction in which the user should move on the basis of a positional relationship between the current position and the target position of the user, a situation of a road or a passage around the user, a situation of an obstacle around the user, and the like. Furthermore, for example, the guidance direction setting unit 111 detects an inclination of a place in a direction in which the user is to move on the basis of the acquired information. The inclination of the place in the direction in which the user should move is, for example, an inclination of a slope, a staircase, or the like existing in the direction in which the user should move.

The guidance direction setting unit 111 sets the direction in which the user should move to the direction (hereinafter, referred to as a horizontal guidance direction) of a horizontal direction (left-right direction) of the guidance direction. The guidance direction setting unit 111 sets the inclination of the location in the direction in which the user should move to the direction (hereinafter, referred to as a vertical guidance direction) of a vertical direction of the guidance direction.

Note that the guidance direction setting unit 111 sets the vertical guidance direction to the horizontal direction in a case where the assisting force acts only in either the upward direction or the downward direction with respect to the horizontal direction.

For example, in a case where the movement assistance system 101 is configured by the balloon robot 1 in Fig. 1, the flight unit 11 basically flies at a position higher than the hand of the user, so that the assisting force acts only upward from the horizontal direction. In this case, the vertical guidance direction is set to the horizontal direction.

For example, in a case where the movement assistance system 101 includes a small dog-shaped robot, the robot basically walks at a position lower than the hand of the user, and thus the assisting force acts only downward from the horizontal direction. In this case, the vertical guidance direction is set to the horizontal direction.

The guidance direction setting unit 111 supplies information indicating the set guidance direction to the assisting force calculation unit 113.

In Step S2, the assisting force calculation unit 113 calculates a guiding force. Specifically, the assisting force calculation unit 113 calculates a force acting with a predetermined magnitude in the direction of the guidance direction set by the guidance direction setting unit 111 as the guiding force.

In Step S3, the position information acquisition unit 112 acquires information associated with the position where the assisting force is applied to the user. That is, the position information acquisition unit 112 acquires information associated with the position of the target part of the user.

Note that a method of acquiring the information associated with the position of the target part of the user is not particularly limited.

For example, in a case where the movement assistance system 101 has a mobile object shape, the position information acquisition unit 112 detects the position of the part of the body of the user in contact with the movement assistance system 101 as the position of the target part on the basis of the image obtained by imaging the user. For example, in the case of the balloon robot 1 in Fig. 1, the position of the hand of the user in contact with the balloon robot 1 is detected as the position of the target part.

For example, in a case where the movement assistance system 101 is a wearable type, the position information acquisition unit 112 detects the position where the movement assistance system 101 is worn by the user as the position of the target part.

The position information acquisition unit 112 supplies information associated with the position of the target part of the user to the assisting force calculation unit 113.

In Step S4, the assisting force calculation unit 113 calculates a virtual force.

For example, in a case where the vertical guidance direction is the horizontal direction or upward from the horizontal direction (in a case where the vertical guidance direction is inclined upward from the horizontal direction), the assisting force calculation unit 113 sets the direction of the virtual force to a vertically upward direction. However, in a case where the assisting force acts only downward from the horizontal direction, the assisting force calculation unit 113 sets the direction of the virtual force vertically downward even if the guidance direction is the horizontal direction.

For example, in a case where the vertical guidance direction is downward from the horizontal direction (in a case where the vertical guidance direction is inclined downward from the horizontal direction), the assisting force calculation unit 113 sets the direction of the virtual force vertically downward.

For example, the assisting force calculation unit 113 sets the magnitude of the virtual force on the basis of the height of the target part in the vertical direction.

Specifically, for example, in a case where the direction of the virtual force is vertically upward, when a height of the target part in the vertical direction is less than a predetermined height H1, the assisting force calculation unit 113 sets the magnitude of the virtual force to a value proportional to a height difference between the height H1 and the target part. As a result, the virtual force in the vertically upward direction increases as the position of the target part decreases. On the other hand, when the height of the target part in the vertical direction is equal to or greater than the height H1, the assisting force calculation unit 113 sets the magnitude of the virtual force to 0.

On the other hand, in a case where the direction of the virtual force is vertically downward, when the height of the target part in the vertical direction exceeds a predetermined height H2, the assisting force calculation unit 113 sets the magnitude of the virtual force to a value proportional to a height difference between the target part and the height H2. As a result, the virtual force in the vertical downward direction increases as the position of the target part increases. On the other hand, the assisting force calculation unit 113 sets the magnitude of the virtual force to 0 when the height of the target part in the vertical direction is equal to or less than the height H2.

In Step S5, the assisting force calculation unit 113 calculates an assisting force. That is, the assisting force calculation unit 113 calculates a resultant force of the virtual force and the guiding force as the assisting force. The assisting force calculation unit 113 supplies information indicating the magnitude and direction of the assisting force to the drive control unit 114.

In Step S6, the movement assistance system 101 applies the assisting force. Specifically, the drive control unit 114 controls the drive unit 115 such that the assisting force of the calculated magnitude and direction is applied to the target part of the user.

Thereafter, the processing returns to Step S1, and the processing in and after Step S1 is executed.

In this way, the user is guided in a three-dimensional guidance direction by the guiding force, and the posture of the user is stabilized by the virtual force. As a result, the user can safely move in the guidance direction without falling. That is, the user can be safely guided.

### «3. Second Embodiment»

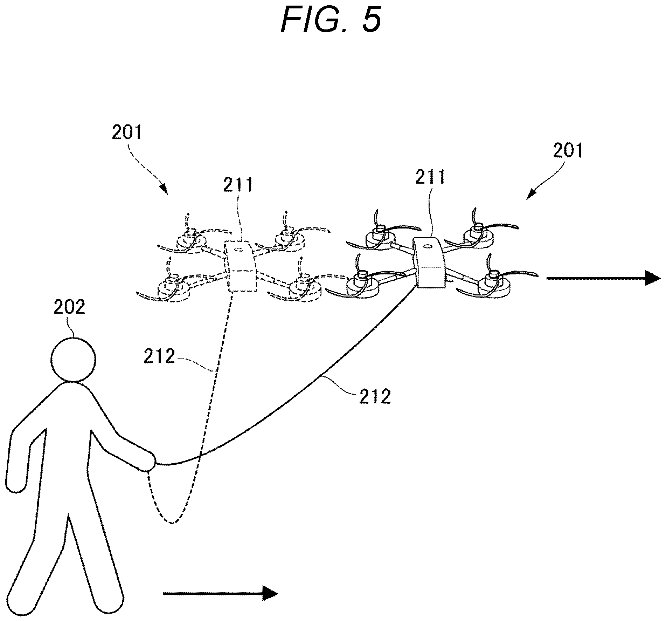

Next, a second embodiment of the present technology will be described with reference to Figs. 5 to 16.

### <Configuration Example of Movement Assistance System 201>

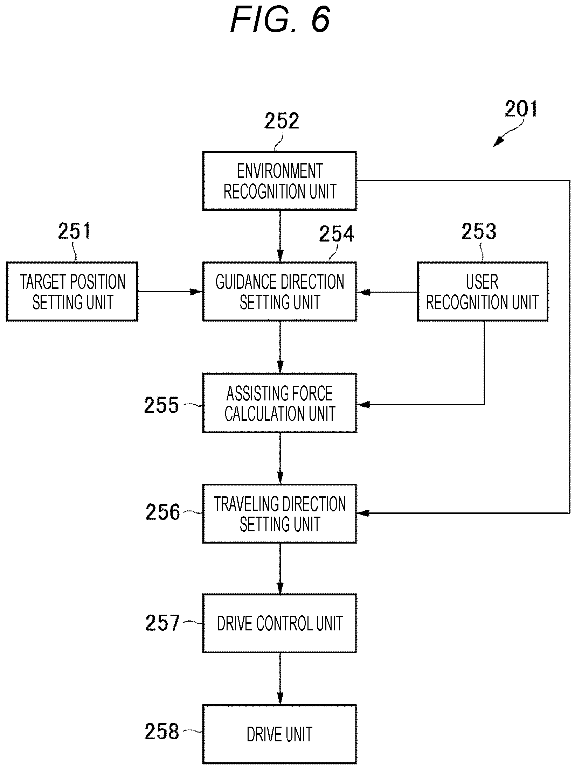

First, a configuration example of a movement assistance system 201 according to the present technology will be described with reference to Figs. 5 and 6.

Fig. 5 schematically illustrates a configuration example of an appearance of the movement assistance system 201.

The movement assistance system 201 is a mobile movement assistance system. The movement assistance system 201 includes a drone 211 and a string 212. One end of the string 212 is connected to the drone 211, and the other end of the string 212 is held by the user 202.

The drone 211 applies an assisting force to the user 202 through the string 212, thereby guiding the user 202 in the guidance direction and stabilizing the posture of the user 202.

Fig. 6 illustrates a configuration example of functions of the movement assistance system 201.

The movement assistance system 201 includes a target position setting unit 251, an environment recognition unit 252, a user recognition unit 253, a guidance direction setting unit 254, an assisting force calculation unit 255, a traveling direction setting unit 256, a drive control unit 257, and a drive unit 258. These are provided, for example, in the drone 211.

The target position setting unit 251 sets a target position that is a target point for guiding the user on the basis of a user input or the like. The target position setting unit 251 supplies information indicating the target position to the guidance direction setting unit 254.

The environment recognition unit 252 executes recognition processing of the environment around the user and the drone 211 using, for example, various sensors, and acquires information associated with the environment around the user and the drone 211. For example, the environment recognition unit 252 acquires information associated with an obstacle around the user and the drone 211. The environment recognition unit 252 supplies information indicating the environment around the user and the drone 211 to the guidance direction setting unit 254 and the traveling direction setting unit 256.

The user recognition unit 253 executes recognition processing of the state of the user using, for example, various sensors, a GNSS receiver, and the like, and acquires information associated with the state of the user. For example, the user recognition unit 253 acquires information associated with the current position of the user and the position (hereinafter, referred to as a string holding position) of the hand of the user holding the string 212 to be the target part. The user recognition unit 253 supplies information associated with the state of the user to the guidance direction setting unit 254 and the assisting force calculation unit 255 as necessary.

The guidance direction setting unit 254 sets a direction (that is, the guidance direction) for guiding the user on the basis of the target position, the current position of the user, and the environment around the user and the drone 211. The guidance direction setting unit 254 supplies information indicating the set guidance direction to the assisting force calculation unit 255.

The assisting force calculation unit 255 calculates the magnitude and direction of the virtual force and the guiding force on the basis of the guidance direction and the string holding position. In addition, the assisting force calculation unit 255 calculates the magnitude and the direction of the assisting force on the basis of the magnitude and the direction of the virtual force and the guiding force. The assisting force calculation unit 255 supplies information indicating the magnitude and direction of the tension of the string 212, which is a force applied to the user as the assisting force, and a length of the string 212 to the traveling direction setting unit 256.

The traveling direction setting unit 256 sets the traveling direction of the drone 211 on the basis of the direction of the tension of the string 212, the length of the string 212, the environment around the drone 211, and the like. The traveling direction setting unit 256 supplies information indicating the magnitude and direction of the tension of the string 212 and the traveling direction of the drone 211 to the drive control unit 257.

The drive control unit 257 controls the drive unit 258 such that the drone 211 flies in accordance with the traveling direction and the calculated tension is applied to the user's string holding position through the string 212.

The drive unit 258 is a portion driven to fly the drone 211 and apply tension to the string 212 under the control of the drive control unit 257. For example, the drive unit 258 includes a power source such as a motor for flying the drone 211.

### <Movement Assistance Processing>

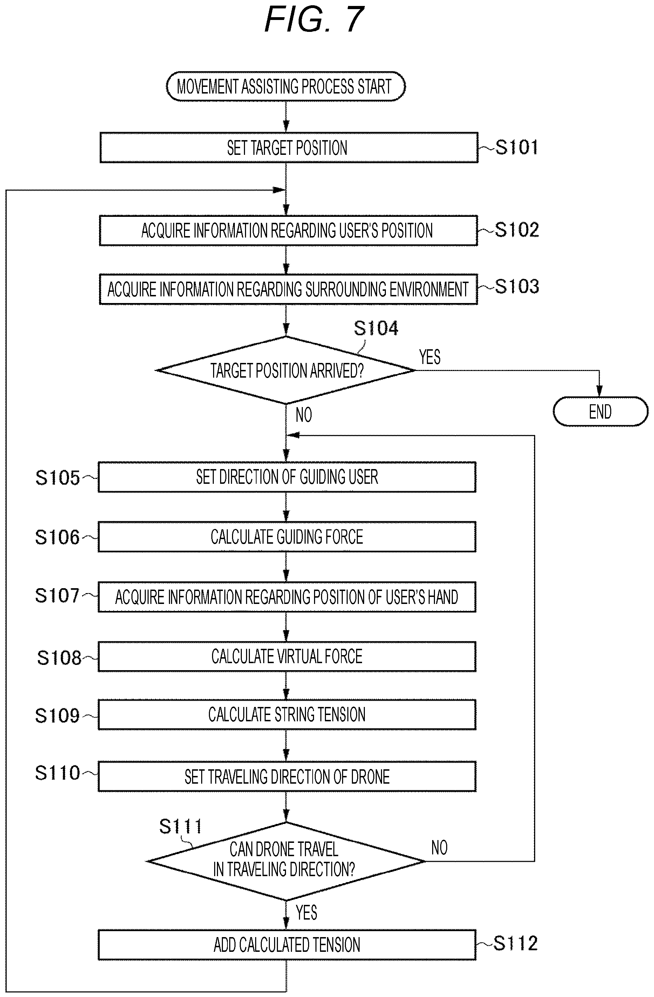

Next, movement assistance processing executed by the movement assistance system 201 will be described with reference to a flowchart of Fig. 7.

This processing is started, for example, when the user instructs the movement assistance system 101 to perform guidance.

In Step S101, the target position setting unit 251 sets a target position. For example, the target position setting unit 251 sets the target position on the basis of a user input or the like. The target position setting unit 251 supplies information indicating the target position to the guidance direction setting unit 254.

In Step S102, the user recognition unit 253 acquires information associated with the position of the user. For example, the user recognition unit 253 detects the current position of the user (movement assistance system 201) by receiving a GNSS signal from a GNSS satellite using a GNSS receiver. The user recognition unit 253 supplies information indicating the current position of the user to the guidance direction setting unit 254.

In Step S103, the environment recognition unit 252 acquires information associated with the surrounding environment. For example, the environment recognition unit 252 acquires information associated with the environment around the drone 211 and the user by sensing the surroundings of the drone 211 and the user by various sensors. For example, the environment recognition unit 252 acquires information such as the position, size, shape, type, movement, and the like of the obstacle around the drone 211 and the user. For example, the environment recognition unit 252 detects an inclination of a place around the user on the basis of sensing results by various sensors, surrounding map information, and the like. The environment recognition unit 252 supplies the guidance direction setting unit 254 with the acquired information associated with the surrounding environment.

In Step S104, the guidance direction setting unit 254 determines whether or not the user has arrived at the target position on the basis of the current position of the user. In a case where it is determined that the set place has not been reached, the processing returns to Step S105.

In Step S105, the guidance direction setting unit 254 sets a direction to guide the user. For example, the guidance direction setting unit 254 sets the guidance direction in which the drone can arrive at the target position in the shortest possible distance while avoiding the obstacle on the basis of the target position, the position of the drone 211, the current position of the user, the position of the obstacle, and the like.

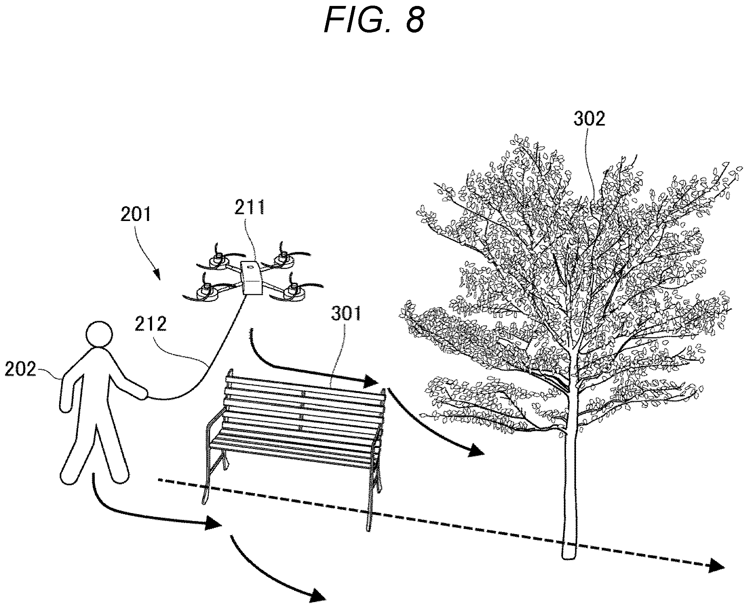

Here, a specific example of a method of setting the horizontal guidance direction will be described with reference to Figs. 8 to 15.

Fig. 8 illustrates an example of an environment around the movement assistance system 201 and the user 202. An arrow in the drawing indicates a direction of the target position. Then, the bench 301 and the tree 302 exist in the direction of the target position as viewed from the user 202.

First, the guidance direction setting unit 254 detects a movable range of user 202 on the basis of a current position of the user 202 and an environment around the user 202.

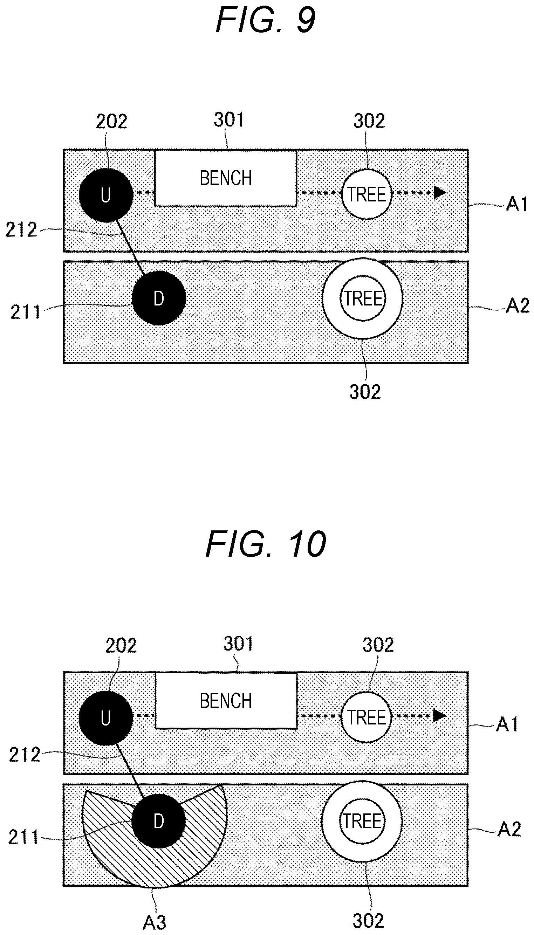

Through this processing, for example, a movable range A1 in Fig. 9 is detected. The movable range A1 is a range excluding the range of the bench 301 and the tree 302, which are obstacles, in the range extending from the surroundings of the user 202 toward the target position.

Next, the guidance direction setting unit 254 detects the movable range of the drone 211 on the basis of the current position of the drone 211 and the surrounding environment of the drone 211.

Through this processing, for example, a movable range A2 in Fig. 9 is detected. The movable range A2 is a range obtained by excluding a range of the tree 302 which is an obstacle in a range extending from the surroundings of the drone 211 in the direction of the target position.

Note that the movable range A1 and the movable range A2 overlap in the vertical direction in reality, but are illustrated side by side in this drawing for easy understanding of the drawing. In addition, since the bench 301 is located at a position lower than the drone 211, the bench 301 does not become an obstacle to the drone 211. Furthermore, since the branches of the tree 302 extend in the horizontal direction at an altitude at which the drone 211 flies, a range of the tree 302 in the movable range A2 is wider than the range of the tree 302 in the movable range A1.

Next, the guidance direction setting unit 254 narrows the movable range of the drone 211 on the basis of constraints such as the current position of the drone 211, the length of the string 212, and the moving speed of the drone 211.

Through this processing, for example, a movable range A3 in Fig. 10 is calculated. The movable range A3 is within the movable range A2 and is a range in which the drone 211 can move by the control timing in the next guidance direction.

Next, the guidance direction setting unit 254 sets a horizontal guidance direction for the user 202 to move to the target position on the basis of the movable range of the user 202 and the movable range of the drone 211. For example, the guidance direction setting unit 254 selects, as the horizontal guidance direction, a direction in which objective functions of a movement distance of the user 202 and a movement distance of the drone 211 are minimized under the following constraint conditions.
- The user 202 moves within the movable range A1.
- The user 202 does not return to the target position.
- The drone 211 satisfies the speed constraint.

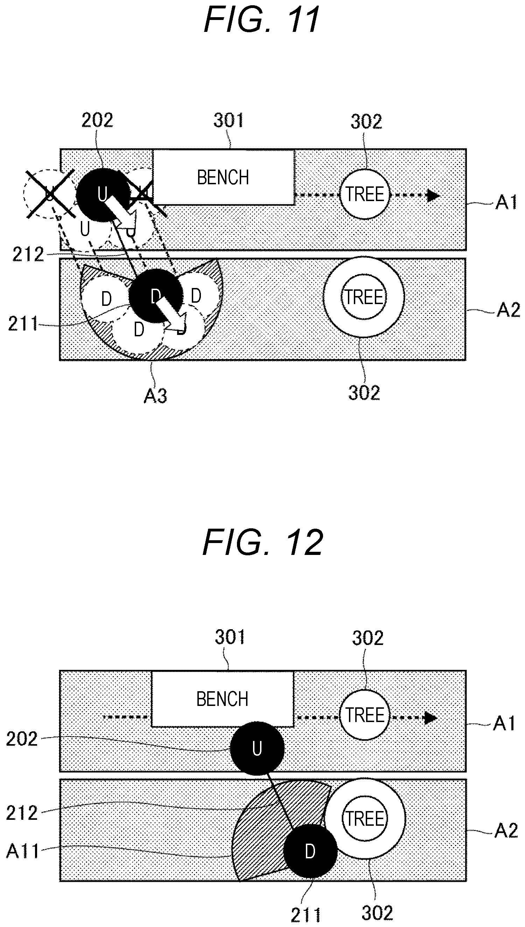

As a result, the horizontal guidance direction of the user 202 is set as indicated by a thick arrow in Fig. 11.

Note that, for example, in a case where the string 212 is a reel type and the length is adjustable, the guidance direction setting unit 254 can set the horizontal guidance direction while adjusting the altitude of the drone 211 by adjusting the length of the string 212.

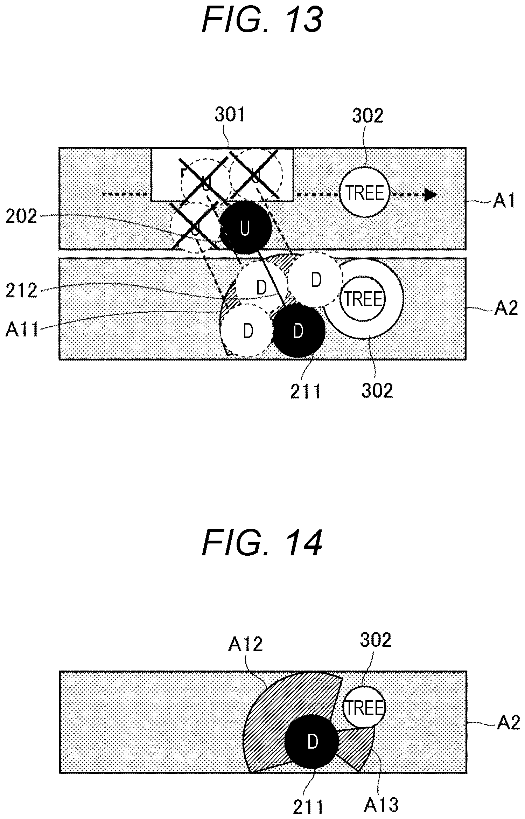

For example, in a case where the positions of the user 202 and the drone 211 are in a state illustrated in Fig. 12, the movable range A11 of the drone 211 is limited by a tree 302 as illustrated in the figure. In this case, as illustrated in Fig. 13, in a case where the drone 211 moves within the movable range A11, the constraint condition that the user 202 does not return to the target position is not satisfied.

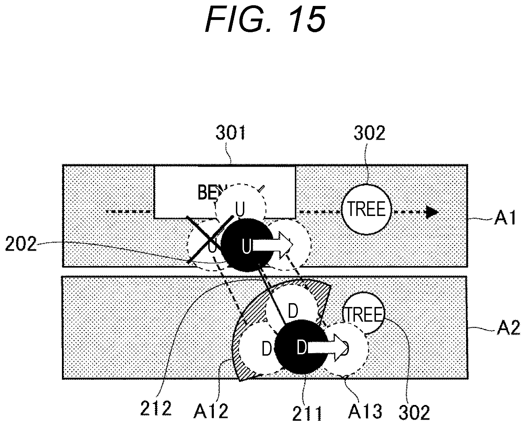

On the other hand, the guidance direction setting unit 254 searches for a guidance direction satisfying the constraint condition in a state where the string 212 is shortened and the altitude of the drone 211 is lowered. For example, as illustrated in Fig. 14, the string 212 is shortened and the altitude of the drone 211 is shortened, so that the range of the tree 302 is narrowed at the altitude of the drone 211. As a result, the movable range of the drone 211 extends to the movable range A12 and the movable range A13. As a result, as indicated by a thick arrow in Fig. 15, it is possible to set the horizontal guidance direction that satisfies the constraint condition.

Note that, for example, in a case where the horizontal guidance direction satisfying the above-described constraint condition is not found, the constraint condition may be relaxed.

In addition, the guidance direction setting unit 254 sets the vertical guidance direction on the basis of an inclination of a place in the horizontal guidance direction as viewed from the user. For example, in a case where there is an upward slope or an upward stair in the horizontal guidance direction as viewed from the user, the vertical guidance direction is set to an obliquely upward direction on the basis of the inclination angle of the slope or the stair. For example, in a case where there is a downhill or downhill stair in the horizontal guidance direction as viewed from the user, the vertical guidance direction is set to the obliquely downward direction on the basis of the inclination angle of the slope or the stair.

The guidance direction setting unit 254 supplies information indicating the set guidance direction to the assisting force calculation unit 255.

In Step S106, the assisting force calculation unit 255 calculates the guiding force. Specifically, the assisting force calculation unit 113 calculates a force acting with a predetermined magnitude in the direction of the guidance direction set by the guidance direction setting unit 111 as the guiding force.

In Step S107, the user recognition unit 253 acquires information associated with the position of the hand of the user.

For example, the user recognition unit 253 images the user using a camera, detects skeleton information of the user on the basis of the captured image, and detects a position (string holding position) of the hand of the user holding the string 212.

Alternatively, for example, the user recognition unit 253 detects the string holding position of the user on the basis of sensor data from an inertial measurement unit (IMU) provided at an end of the string 212, a wristband for wearing the string 212 on the user, or the like. This sensor data is transmitted to the user through the string 212, for example.

Alternatively, for example, the user recognition unit 253 detects a relative position of the string holding position with respect to a predetermined position of the drone 211 by detecting a tag provided at an end of the string 212, a wristband for wearing the string 212 to the user, or the like with a sensor provided in the drone 211.

The user recognition unit 253 supplies information indicating the string holding position to the assisting force calculation unit 255.

In Step S108, the assisting force calculation unit 255 calculates a virtual force.

For example, in a case where the vertical guidance direction is the horizontal direction or upward from the horizontal direction, the assisting force calculation unit 255 sets the direction of the virtual force to the vertically upward direction. On the other hand, in a case where the vertical guidance direction is downward from the horizontal direction, the assisting force calculation unit 255 sets the direction of the virtual force vertically downward.

For example, in a case where the direction of the virtual force is vertically upward, when the height of the string holding position in the vertical direction is less than a predetermined height H11, the assisting force calculation unit 255 sets the magnitude of the virtual force to a value proportional to a height difference between the height H11 and the string holding position. Therefore, the lower the string holding position, the greater the virtual force. On the other hand, the assisting force calculation unit 255 sets the magnitude of the virtual force to 0 when the height of the string holding position in the vertical direction is the height H11 or more.

For example, in a case where the direction of the virtual force is vertically downward, when the height of the string holding position in the vertical direction exceeds a predetermined height H12, the assisting force calculation unit 255 sets the magnitude of the virtual force to a value proportional to a height difference between the string holding position and the height H12. Thus, as the string holding position becomes higher, the virtual force becomes larger. On the other hand, the assisting force calculation unit 255 sets the magnitude of the virtual force to 0 when the height of the string holding position in the vertical direction is equal to or less than the height H12.

In Step S109, the assisting force calculation unit 255 calculates the tension of the string 212. Specifically, the assisting force calculation unit 255 calculates the assisting force which is a resultant force of the guiding force and the virtual force. The assisting force calculation unit 255 sets the calculated assisting force to the tension of the string 212. The assisting force calculation unit 255 supplies information indicating the magnitude and direction of the tension of the string 212 and the length of the string 212 to the traveling direction setting unit 256.

In Step S110, the traveling direction setting unit 256 sets the traveling direction of the drone 211. Specifically, the traveling direction setting unit 256 calculates the traveling direction of the drone 211 for generating the tension of the calculated direction in the user's string holding position on the basis of the direction of the tension (assisting force) of the string 212 and the length of the string 212 (≈ a relative distance between the user and the drone 211).

Note that, for example, in a case where the direction of the assisting force is upward from the horizontal direction, the traveling direction is set such that the drone 211 flies at a position higher than the user's string holding position. For example, in a case where the direction of the assisting force is the horizontal direction, the traveling direction is set such that the drone 211 flies at substantially the same height as the user's string holding position. For example, in a case where the direction of the assisting force is downward from the horizontal direction, the traveling direction is set such that the drone 211 flies at a position lower than the user's string holding position.

In Step S111, the traveling direction setting unit 256 determines whether or not the drone 211 can move in the traveling direction. For example, in a case where the traveling direction setting unit 256 determines that the drone 211 cannot move in the traveling direction due to an obstacle or the like on the basis of the information associated with the environment around the drone 211, the processing returns to Step S105.

Thereafter, the processing of Steps S105 to Sill is repeatedly executed until it is determined in Step S111 that the drone 211 cannot travel in the traveling direction. As a result, the guidance direction of the user, the assisting force, and the traveling direction of the drone 211 are adjusted.

On the other hand, in a case where it is determined in Step S111 that the drone 211 can move in the traveling direction, the processing proceeds to Step S112.

In Step S112, the movement assistance system 101 applies the calculated tension. Specifically, the drive control unit 114 controls the drive unit 258 such that the drone 211 moves in the set traveling direction, and the tension of the calculated magnitude and direction is applied to the user's string holding position through the string 212.

Thereafter, the processing returns to Step S102, and the processing of Steps S102 to S112 is repeatedly executed until it is determined in Step S104 that the vehicle has arrived at the target position.

On the other hand, in a case where it is determined in Step S104 that the vehicle has arrived at the target position, the movement assistance processing ends.

### <State Transition of Movement Assistance System 201>

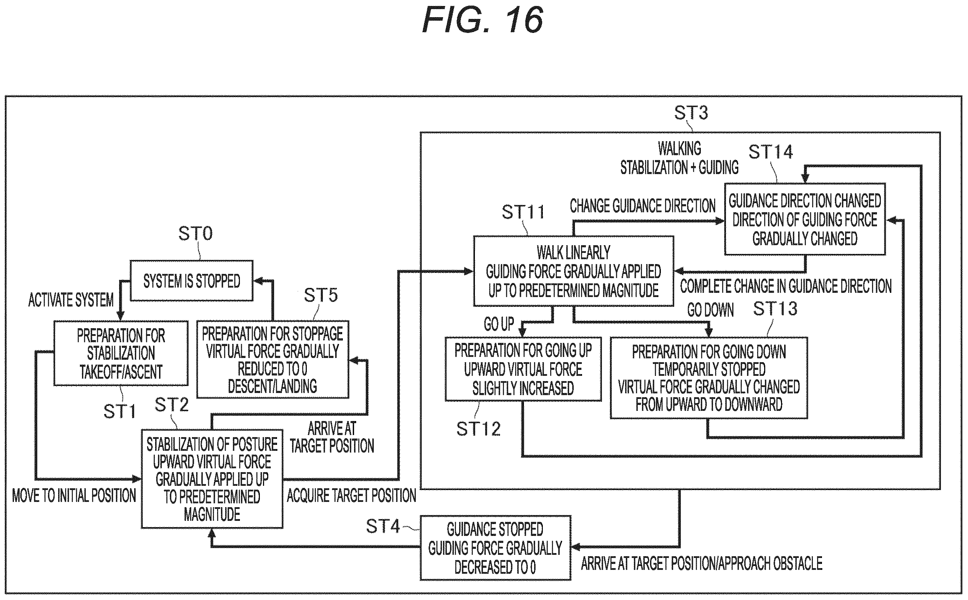

Next, a state transition of the movement assistance system 201 will be described with reference to Fig. 16.

Fig. 16 is a state machine diagram of the movement assistance system 201.

A state ST0 is a state in which the movement assistance system 201 is stopped. The movement assistance system 201 is activated in the state ST0, and then the movement assistance system 201 transitions to a state ST1.

The state ST1 is a state in which preparation for stabilizing the posture of the user is performed. In the state ST1, the drone 211 takes off and ascends to an initial position (for example, a predetermined height). The drone 211 moves to the initial position in the state ST1, and then the movement assistance system 201 transitions to a state ST2.

The state ST2 is a state in which stabilization of the posture of the user is being activated. In the state ST2, a vertically upward virtual force is gradually applied to the user up to a predetermined magnitude. The target position of the user is acquired in the state ST2, and then the movement assistance system 201 transitions to a state ST3. More specifically, the movement assistance system 201 transitions to a state ST11 in the state ST3.

The state ST3 is a state in which the walking of the user is stabilized and guided.

The state ST11 is a state in which guidance is performed so that the user walks linearly. That is, the state ST11 is a state in which the user is being guided to walk straight. In the state ST11, the guiding force is gradually applied to a predetermined magnitude. In the state ST11, the user approaches an upward direction such as a stair or a slope, and then the movement assistance system 201 transitions to a state ST12.

The state ST12 is a state in which preparation for guidance for the user to go up stairs, slopes, and the like is being performed. In the state ST12, the virtual force in the vertically upward direction is slightly increased. Thereafter, the movement assistance system 201 transitions to a state ST14.

Furthermore, in a case where the user is about to descend a staircase, a slope, or the like in the state ST11, the movement assistance system 201 transitions to a state ST13.

The state ST13 is a state in which preparation for guidance for the user to go down stairs, slopes, and the like is being performed. In the state ST13, the movement assistance system 201 temporarily stops. Thereafter, the virtual force is gradually changed from vertically upward to vertically downward. Thereafter, the movement assistance system 201 transitions to a state ST14.

Furthermore, in a case of changing the guidance direction in the state ST11, the movement assistance system 201 transitions to the state ST14.

The state ST14 is a state in which the guidance direction is being changed. In the state ST14, the direction of the guiding force is gradually changed. The change of the guidance direction is completed in the state ST14, and then the state transitions to the state ST11.

In any of the states ST11 to ST14, the user arrives at the target position or the user approaches the obstacle, and then the movement assistance system 201 transitions to a state ST4.

The state ST4 is a state in which the guidance is stopped. In the state ST4, the magnitude of the guiding force gradually decreases. Thereafter, when the guiding force becomes 0, the movement assistance system 201 transitions to the state ST2.

The user arrives at the target position in the state ST2, and then the movement assistance system 201 transitions to a state ST6.

The state ST6 is a state in which the movement assistance system 201 is preparing to stop. In the state ST6, the magnitude of the virtual force gradually decreases and is finally set to 0. In addition, the drone 211 descends and lands. Thereafter, the movement assistance system 201 transitions to a state ST0.

In this way, the user is guided in a three-dimensional guidance direction by the guiding force, and the posture of the user is stabilized by the virtual force. As a result, the user can safely move in the guidance direction with a stable movement without falling. That is, the user can be safely guided.

In addition, the virtual force and the guiding force gradually increase at the start of the guidance, and the virtual force and the guiding force gradually decrease at the end of the guidance. This prevents the user from losing his/her balance due to a sudden change in the virtual force and the guiding force.

Furthermore, at the start of the guidance, the virtual force and the guiding force are applied to the user in this order, and at the end of the guidance, the guiding force and the virtual force are set to 0 in this order. As a result, the user can start the movement after the posture is stabilized, and end the movement while the posture is stabilized.

Furthermore, the user is guided using the drone 211, thereby making it possible to stably guide the user regardless of the state of the ground, the road surface, or the like on which the user moves. In addition, the environment around the user can be monitored from a high position, and the user can be guided more safely.

### «4. Modifications»

Hereinafter, modifications of the above-described embodiments of the present technology will be described.

### <Modification Regarding Virtual Force and Guiding Force>

For example, the movement assistance system 101 and the movement assistance system 201 may adjust the magnitude and direction of the virtual force and the magnitude and direction of the guiding force according to each user, the state of the user, the environment around the user, and the like.

Note that, hereinafter, adjusting at least one of the magnitude and direction of the virtual force and the magnitude and direction of the guiding force will be simply expressed as adjusting the virtual force and the guiding force.

Specifically, for example, the movement assistance system 101 and the movement assistance system 201 may adjust the balance between the virtual force and the guiding force on the basis of at least one of the state of the user and the environment around the user. As a result, for example, the balance between the stabilization of the posture and the guidance is appropriately adjusted according to whether or not the user holds a cane, whether or not the walking function of the user is deteriorated, the age of the user, and the like.

For example, the movement assistance system 101 and the movement assistance system 201 may adjust the virtual force and the guiding force on the basis of not only the position of the target part of the user but also the movement speed and acceleration of the user. This makes it possible to more appropriately stabilize the posture of the user or guide the user.

For example, the movement assistance system 101 and the movement assistance system 201 may recognize the state of the road surface on which the user is moving on the basis of the map information and the sensing information, and adjust the virtual force and the guiding force on the basis of the state of the road surface. As a result, for example, in a case where the state of the road surface is bad (for example, in a case where there are many unevenness, wet, or the like), the virtual force is increased, so that the stabilization of the posture of the user is prioritized, and the safety is improved.

For example, in a case where stabilization and guidance of the posture of the user are unnecessary, the drone 211 may follow the user with substantially no tension generated in the string 212. This allows the user to move freely without worrying about the drone 211.

For example, the movement assistance system 101 and the movement assistance system 201 may test several patterns of the magnitude and direction of the virtual force and the magnitude and direction of the guiding force before use. Then, the movement assistance system 101 and the movement assistance system 201 may adjust the virtual force and the guiding force according to exercise ability or preference of the user, for example. As a result, for example, the posture of the user can be appropriately stabilized and guided according to the age, height, degree of disability, and the like of the user.

For example, the movement assistance system 101 and the movement assistance system 201 may recognize the reaction of the user to the virtual force and the guiding force. Then, the movement assistance system 101 and the movement assistance system 201 may dynamically adjust the virtual force and the guiding force according to the reaction of the user. As a result, for example, it is possible to appropriately cope with a situation in which it is difficult to adjust the virtual force and the guiding force of a slope, a staircase, an uneven road, or the like at one time, or a change in environment such as wind or rain.

For example, the movement assistance system 101 and the movement assistance system 201 may adjust the virtual force and the guiding force on the basis of the user's past behavior. As a result, for example, in a place that the user is accustomed to, the user can move freely by guiding lightly. On the other hand, for example, in a place where the user is not accustomed to, such as a place where the user goes for the first time, the user can move with a sense of security by firmly guiding the user.

For example, the movement assistance system 101 and the movement assistance system 201 may acquire obstacle information and the like from other devices, and adjust the virtual force and the guiding force on the basis of the acquired obstacle information. As a result, for example, the virtual force and the guiding force are appropriately adjusted on the basis of information associated with the obstacle and the road surface obtained by the other robot traveling first, and so on and the safety is improved.

For example, the movement assistance system 101 and the movement assistance system 201 may recognize the state of the surrounding person, acquire walking information from a device used by the surrounding person, and adjust the virtual force and the guiding force on the basis of the result. As a result, for example, with an increase in the virtual force at a place where a pedestrian in front stumbles, the safety of the user is improved.

For example, the movement assistance system 201 may change a constraint condition and an objective function used for setting the guidance direction, and set the guidance direction of the user and the traveling direction of the drone 211 in accordance with the user and the environment. For example, taking into consideration of the moving speed of the user as the constraint condition, it is possible to appropriately cope with a user whose walking speed is slow. For example, with use of an objective function that increases the distance to the obstacle as the objective function, the user can move more safely.

For example, the output of the motor of the drone 211 may be adjusted in accordance with the moving speed of the user. This allows the user to freely change the moving speed. Furthermore, the tension of the string 212 can be more appropriately generated in accordance with the moving speed of the user, and the safety and convenience are improved.

For example, the movement assistance system 201 may learn a relationship between the output of the motor of the drone 211, the tension of the string 212, and the moving speed of the user. This makes it possible to generate necessary tension and determine the output of the motor of the drone 211 suitable for the moving speed of the user. Note that the moving speed of the user can be calculated or predicted by the user recognition unit 253 grasping the time-series position of the user.

### <Modification Regarding String>

For example, a material such as elastic rubber or spring may be used for the string 212. This makes it possible to guide the user more gently.

For example, the user may adjust a flying height of the drone 211 and a length of the string 212. As a result, for example, the movement assistance system 201 can be used from a child to an adult according to the height of the user. In addition, it is possible to use the movement assistance system 201 according to a height of a ceiling even indoors.

For example, a sensor capable of recognizing the shape of the string 212 may be provided in the movement assistance system 201. As a result, for example, in a case where the string 212 is caught or entangled with something, it is possible to plan the movement of the drone 211 for returning the string 212 to an original state.

For example, the drone 211 may be able to automatically attach and detach the string 212 so as to be able to autonomously move independently in a state where the string 212 is disconnected. As a result, the drone 211 can go to check the surrounding situation first or to request support from the surrounding people.

For example, instead of the string 212, a string-like member such as a wire or a chain can be used.

### <Other Modifications>

For example, the movement assistance system 201 may detect an abnormality such as falling down by recognizing that the user pulls the string 212. Then, for example, in a case where an abnormality is detected, the movement assistance system 201 may perform a danger avoidance operation such as separating the drone 211 from the user or loosening the string 212.

For example, functions such as voice recognition, voice input, and voice guidance may be added to the movement assistance system 101 and the movement assistance system 201. As a result, it is possible to appropriately cope with a case where it is difficult to guide the user by force or a case where it is difficult for the user to operate by hand.

For example, the movement assistance system 201 may plan the movement route of the user and the drone 211 in consideration of the movement of the surrounding mobile object (for example, a person, a drone, a vehicle, or the like). As a result, it is possible to prevent the user or the drone 211 from colliding with a surrounding mobile object or the string 212 from being entangled with the surrounding mobile object.

For example, the drone 211 may be customized by updating software, replacing hardware, or the like. As a result, for example, the drone 211 can are added with functions such as imaging with a camera, illuminating a foot of the user with a light, and outputting voice guidance.

For example, in the case of a mobile type movement assistance system, a mobile object and a control device that controls the mobile object may be separated. For example, the control device may acquire information associated with the state of the user and the surrounding environment from the mobile object, calculate the virtual force and the guiding force on the basis of the acquired information, and calculate the assisting force which is a resultant force of the virtual force and the guiding force. Furthermore, for example, the control device may remotely control the drive unit of the mobile object so that the assisting force is applied to the target part of the user.

For example, the target part to which the assisting force is applied does not necessarily need to be fixed at one position, and can be moved.

### «5. Others»

### <Configuration Example of Computer>

The above-described series of processing can be performed by hardware or software. In a case where the series of processing is performed by software, a program constituting the software is installed in a computer. Here, examples of the computer include a computer incorporated in dedicated hardware, and a general-purpose personal computer capable of executing various functions by installing various programs, for example.

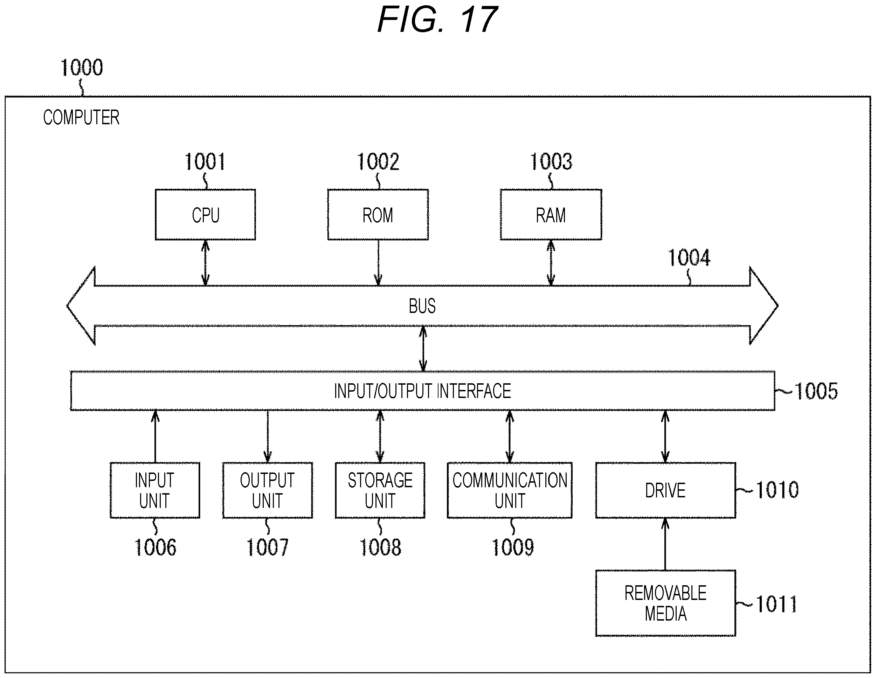

Fig. 17 is a block diagram illustrating a configuration example of the hardware of the computer that executes the above-described series of processing with a program.

In a computer 1000, a central processing unit (CPU) 1001, a read only memory (ROM) 1002, and a random access memory (RAM) 1003 are mutually connected by a bus 1004.

An input/output interface 1005 is further connected to the bus 1004. An input unit 1006, an output unit 1007, a storage unit 1008, a communication unit 1009, and a drive 1010 are connected to the input/output interface 1005.

The input unit 1006 includes an input switch, a button, a microphone, an imaging element, and the like. The output unit 1007 includes a display, a speaker, and the like. The storage unit 1008 includes a hard disk, a non-volatile memory, and the like. The communication unit 1009 includes a network interface and the like. The drive 1010 drives a removable medium 1011 such as a magnetic disk, an optical disc, a magneto-optical disk, or a semiconductor memory.

In the computer 1000 configured as described above, the series of processing described above is performed, for example, by the CPU 1001 loading a program recorded in the storage unit 1008 into the RAM 1003 through the input/output interface 1005 and the bus 1004, and executing the program.

The program executed by the computer 1000 (CPU 1001) can be provided by being recorded in the removable medium 1011 as a package medium or the like, for example. Furthermore, the program can be provided through a wired or wireless transmission medium, such as a local area network, the Internet, or digital satellite broadcasting.

In the computer 1000, by attaching the removable medium 1011 to the drive 1010, the program can be installed in the storage unit 1008 through the input/output interface 1005. Furthermore, the program can be received by the communication unit 1009 through a wired or wireless transmission medium, and installed in the storage unit 1008. In addition, the program can be installed in the ROM 1002 or the storage unit 1008 in advance.

Note that, the program executed by the computer may be a program for processing in time series in the order described in the present specification, or a program for processing in parallel or at a necessary timing such as when a call is made.

Furthermore, in the present description, a system is intended to mean assembly of a plurality of components (devices, modules (parts), and the like) and it does not matter whether or not all the components are in the same casing. Therefore, a plurality of devices accommodated in separate casings and connected through a network and one device in which a plurality of modules is accommodated in one casing are both systems.

Moreover, the embodiments of the present technology are not limited to the above-described embodiments, and various modifications can be made without departing from the gist of the present technology.

For example, the present technology may be configured as cloud computing in which a function is shared by a plurality of devices through a network to process together.

Furthermore, each step described in the flowchart described above may be executed by one device, or may be executed in a shared manner by a plurality of devices.

Moreover, in a case where a plurality of pieces of processing is included in one Step, the plurality of pieces of processing included in the one Step can be executed by one device or executed by a plurality of devices in a shared manner.

### <Example of Combinations of Configurations>

The present technology may also have the following configurations.
(1) A movement assistance device including:
   a drive control unit configured to control a drive unit to apply, to a user, an assisting force that is a resultant force of a virtual force that is a force for stabilizing a posture of the user and a guiding force that is a force for guiding the user.
(2) The movement assistance device according to the above (1), in which
   a direction of the virtual force is set in a vertical direction, and
   a direction of the guiding force is set to a guidance direction that is a direction of guiding the user.
(3) The movement assistance device according to the above (2), in which
   a magnitude of the virtual force changes depending on a height of a part in the vertical direction of a body of the user to which the assisting force is applied.
(4) The movement assistance device according to the above (3), in which
   a direction of the virtual force is set vertically upward in a case where the guidance direction is a horizontal direction or upward from the horizontal direction, and is set vertically downward in a case where the guidance direction is downward from the horizontal direction.
(5) The movement assistance device according to the above (4), in which
   the magnitude of the virtual force is proportional to a height difference between a first height and the height of the part when the height of the part in the vertical direction is less than the first height and is set to 0 when the height of the part in the vertical direction is the first height or more in a case where the guidance direction is the horizontal direction or upward from the horizontal direction, and the magnitude of the virtual force is proportional to a height difference between the height of the part and a second height when the height of the part in the vertical direction exceeds the second height, and is set to 0 when the height of the part in the vertical direction is the second height or less in a case where the guidance direction is downward from the horizontal direction.
(6) The movement assistance device according to any one of the above (3) to (5), in which
   a magnitude of the guiding force is constant.
(7) The movement assistance device according to any one of the above (3) to (6), in which
   the part is a hand of the user.
(8) The movement assistance device according to any one of the above (2) to (7), further comprising
   a guidance direction setting unit that sets the guidance direction on a basis of an environment around the user.
(9) The movement assistance device according to the above (8), in which
   the drive control unit applies the assisting force to the user by controlling the drive unit of the mobile object to move the mobile object, and
   the guidance direction setting unit sets the guidance direction further on a basis of an environment around the mobile object.
(10) The movement assistance device according to any one of the above (1) to (8), in which
   the drive control unit applies the assisting force to the user by controlling the drive unit of the mobile object to move the mobile object.
(11) The movement assistance device according to the above (10), in which
   the user and the mobile object are connected by a string-like member, and
   the assisting force is applied to the user as a tension by the string-like member.
(12) The movement assistance device according to the above (11), in which
   the mobile object is a drone.
(13) The movement assistance device according to the above (11) or (12), in which
   the drive control unit causes the mobile object to follow the user in a case where stabilization and guidance of a posture of the user are unnecessary.
(14) The movement assistance device according to any one of the above (10) to (13), further including
   the drive unit, in which
   the drive control unit is provided in the mobile object.
(15) The movement assistance device according to any one of the above (1) to (8), further including
   the drive unit, in which
   the movement assistance device is worn on a predetermined part of a body of the user, and
   the drive control unit controls the drive unit to apply the assisting force to the part.
(16) The movement assistance device according to the above (15), in which
   the part is a finger, a wrist, an arm, a back, a shoulder, or a waist of the user.
(17) The movement assistance device according to any one of the above (1) to (16), in which
   the drive control unit adjusts a balance between the virtual force and the guiding force on a basis of at least one of a state of the user and an environment around the user.
(18) The movement assistance device according to any one of the above (1) to (17), in which
   the drive control unit gradually changes the virtual force and the guiding force at a start and end of the guidance of the user.
(19) The movement assistance device according to any one of the above (1) to (18), in which
   the drive control unit applies the virtual force and the guiding force to the user in this order at a start of the guidance of the user, and sets the virtual force and the guiding force to 0 in this order at an end of the guidance of the user.
(20) A movement assistance method including
   controlling a drive unit to apply, to a user, an assisting force that is a resultant force of a virtual force that is a force for stabilizing a posture of the user and a guiding force that is a force for guiding the user.

Note that the effects described herein are merely examples and are not limited, and other effects may be provided.

### REFERENCE SIGNS LIST

- 1: Ballooning robot
- 11: Flight unit
- 12: String
- 101: Movement assistance system
- 111: Guidance direction setting unit
- 112: Position information acquisition unit
- 113: Assisting force calculation unit
- 114: Drive control unit
- 115: Drive unit
- 201: Movement assistance system
- 211: Drone
- 212: String
- 251: Target position setting unit
- 252: Environment recognition unit
- 253: User recognition unit
- 254: Guidance direction setting unit
- 255: Assisting force calculation unit
- 256: Traveling direction setting unit
- 257: Drive control unit
- 258: Drive unit

## Claims

1. A movement assistance device comprising:
a drive control unit configured to control a drive unit to apply, to a user, an assisting force that is a resultant force of a virtual force that is a force for stabilizing a posture of the user and a guiding force that is a force for guiding the user.

2. The movement assistance device according to claim 1, wherein a direction of the virtual force is set in a vertical direction, and
a direction of the guiding force is set to a guidance direction that is a direction of guiding the user.

3. The movement assistance device according to claim 2, wherein a magnitude of the virtual force changes depending on a height of a part in the vertical direction of a body of the user to which the assisting force is applied.

4. The movement assistance device according to claim 3, wherein a direction of the virtual force is set vertically upward in a case where the guidance direction is a horizontal direction or upward from the horizontal direction, and is set vertically downward in a case where the guidance direction is downward from the horizontal direction.

5. The movement assistance device according to claim 4, wherein the magnitude of the virtual force is proportional to a height difference between a first height and the height of the part when the height of the part in the vertical direction is less than the first height and is set to 0 when the height of the part in the vertical direction is the first height or more in a case where the guidance direction is the horizontal direction or upward from the horizontal direction, and the magnitude of the virtual force is proportional to a height difference between the height of the part and a second height when the height of the part in the vertical direction exceeds the second height, and is set to 0 when the height of the part in the vertical direction is the second height or less in a case where the guidance direction is downward from the horizontal direction.

6. The movement assistance device according to claim 3, wherein the magnitude of the guiding force is constant.

7. The movement assistance device according to claim 3, wherein the part is a hand of the user.

8. The movement assistance device according to claim 2, further comprising a guidance direction setting unit that sets the guidance direction on a basis of an environment around the user.

9. The movement assistance device according to claim 8, wherein the drive control unit applies the assisting force to the user by controlling the drive unit of the mobile object to move the mobile object, and
the guidance direction setting unit sets the guidance direction further on a basis of an environment around the mobile object.

10. The movement assistance device according to claim 1, wherein the drive control unit applies the assisting force to the user by controlling the drive unit of a mobile object to move the mobile object.

11. The movement assistance device according to claim 10, wherein the user and the mobile object are connected by a string-like member, and
the assisting force is applied to the user as a tension by the string-like member.

12. The movement assistance device according to claim 11, wherein the mobile object is a drone.

13. The movement assistance device according to claim 10, further comprising the drive unit, wherein
the drive control unit is provided in the mobile object.

14. The movement assistance device according to claim 11, wherein the drive control unit causes the mobile object to follow the user in a case where stabilization and guidance of a posture of the user are unnecessary.

15. The movement assistance device according to claim 1, further comprising the drive unit, wherein
the movement assistance device is worn on a predetermined part of a body of the user, and
the drive control unit controls the drive unit to apply the assisting force to the part.

16. The movement assistance device according to claim 15, wherein the part is a finger, a wrist, an arm, a back, a shoulder, or a waist of the user.

17. The movement assistance device according to claim 1, wherein the drive control unit adjusts a balance between the virtual force and the guiding force on a basis of at least one of a state of the user and an environment around the user.

18. The movement assistance device according to claim 1, wherein the drive control unit gradually changes the virtual force and the guiding force at a start and end of the guidance of the user.

19. The movement assistance device according to claim 1, wherein the drive control unit applies the virtual force and the guiding force to the user in this order at a start of the guidance of the user, and sets the virtual force and the guiding force to 0 in this order at an end of the guidance of the user.

20. A movement assistance method comprising
controlling a drive unit to apply, to a user, an assisting force that is a resultant force of a virtual force that is a force for stabilizing a posture of the user and a guiding force that is a force for guiding the user.
